# EUROPÄISCHE PATENTSCHRIFT

(11) **EP 4 107 409 B1**
(45) Veröffentlichungstag und Bekanntmachung des Hinweises auf die Patenterteilung: **02.04.2025**
(21) Anmeldenummer: 21707895.5
(22) Anmeldetag: 29.01.2021
(51) Int. Cl.: F16H 3/66, F16H 3/54, F16H 57/10, F16H 57/08, F16D 21/08, F16D 11/00, F16D 13/00, F16D 41/00, F16D 67/02, F16D 63/00

(54) **SCHALTANORDNUNG FÜR EIN GETRIEBE**
SHIFTING ASSEMBLY FOR A TRANSMISSION
ENSEMBLE CHANGEMENT DE VITESSE POUR UNE TRANSMISSION

(30) Priorität: 21.02.2020 DE 102020104676
(43) Veröffentlichungstag der Anmeldung: 28.12.2022
(73) Patentinhaber: REVOLUTE GmbH, 34127 Kassel (DE)
(72) Erfinder: BRAUN, Caspar, 34119 Kassel (DE); SCHLERETH, Daniel, 97702 Reichenbach (DE)
(74) Vertreter: Walther Bayer Faber Patentanwälte PartGmbB
(86) Internationale Anmeldenummer: PCT/EP2021/052085
(87) Internationale Veröffentlichungsnummer: WO 2021/165016

(56) Entgegenhaltungen:
- DE-A1- 102011 101 151
- DE-A1- 102018 117 051

## Beschreibung

Die vorliegende Erfindung betrifft ein Getriebe mit wenigstens einer Schaltanordnung.

### STAND DER TECHNIK

Getriebe sind Maschinenelemente mittels derer Bewegungsgrößen veränderbar sind, d.h. sie dienen zur Übertragung und/oder Umformung von Bewegungen, Energie und/oder Momenten. Zugehörige Schaltanordnungen umfassen Schaltelemente, beispielsweise Kupplungen, Freiläufe und Bremsen, mittels welcher Getriebekomponenten selektiv miteinander in Wechselwirkung gebracht, voneinander entkoppelt oder festgesetzt werden können. Im Sinne der vorliegenden Erfindung kann eine Schaltanordnung Bestandteil eines Getriebes sein und neben den Schaltelementen auch weitere Getriebekomponenten, wie beispielsweise Wellen oder Räder eines Planetensatzes, umfassen. Aus der Verwendung von Schaltelementen in mehrstufigen Getrieben für Fahrzeugantriebe resultiert eine Vielzahl an schaltbaren Übersetzungen, und aufgrund der realisierbaren geringen Baumaße sind insbesondere auch Anwendungen für hybride Antriebskonzepte sowie für Fahrräder möglich.

Aus der DE 10 2011 101 151 A1 ist ein Getriebe mit wenigstens einer Schaltanordnung bekannt, wobei die Schaltanordnung wenigstens eine erste Komponente, eine zweite Komponente und eine dritte Komponente aufweist, wobei die Komponenten schaltzustandsabhängig in Wechselwirkung stehen, indem eine Reibkupplung zwischen der ersten Komponente und der zweiten Komponente angeordnet ist, eine Formschlusskupplung zwischen der zweiten Komponente und der dritten Komponente angeordnet ist und eine Freilaufeinheit zwischen der zweiten Komponente und der dritten Komponente angeordnet ist, und wobei ein Verbindungsmittel vorgesehen ist, das einen Kupplungsteil der Reibkupplung mit einem Kupplungsteil der Formschlusskupplung verbindet.

Die DE 10 2018 117 051 A1 offenbart ein weiteres Getriebe mit einem Gehäuse, mit einer Eingangswelle zur Einkopplung einer mechanischen Leistung und mit einer Ausgangswelle zur Auskopplung der mechanischen Leistung, wobei die Drehzahl der Ausgangswelle gegenüber der Drehzahl der Eingangswelle in Schaltstufen und unter Last veränderbar ist, und mit wenigstens einer Planetenstufe aufweisend mehrere Komponenten wenigstens umfassend ein Sonnenrad, einen Planetensteg und ein Hohlrad, wobei eine Leistungsverzweigung vorgesehen ist, die zur Verzweigung der einkoppelbaren mechanischen Leistung an wenigstens zwei verschiedene Komponenten der Planetenstufe ausgebildet ist, und wobei Schaltelemente so eingerichtet sind, dass die Eingangswelle als Teil der Leistungsverzweigung mit den wenigstens zwei verschiedenen Komponenten der Planetenstufe mittels der Schaltelemente wahlweise in Eingriff bringbar ist.

### OFFENBARUNG DER ERFINDUNG

Es ist die Aufgabe der vorliegenden Erfindung, eine Weiterbildung einer Schaltanordnung für ein Getriebe vorzuschlagen, welche eine Kopplung von drei Getriebekomponenten in unterschiedliche Schaltzustände ermöglicht, wobei insbesondere eine einfache Aktuierung der Schaltanordnung angestrebt ist.

Diese Aufgabe wird ausgehend von einer Schaltanordnung für ein Getriebe gemäß Anspruch 1 gelöst. Vorteilhafte Weiterbildungen der Erfindung sind in den abhängigen Ansprüchen angegeben.

Die Erfindung geht von einem Getriebe mit wenigstens einer Schaltanordnung aufweisend wenigstens eine erste Komponente, eine zweite Komponente und eine dritte Komponente aus, wobei die Komponenten schaltzustandsabhängig in Wechselwirkung stehen, indem:
- eine Reibkupplung zwischen der ersten Komponente und der zweiten Komponente angeordnet ist,
- eine Formschlusskupplung zwischen der zweiten Komponente und der dritten Komponente angeordnet ist und
- eine Freilaufeinheit zwischen der zweiten Komponente und der dritten Komponente angeordnet ist,
und wobei ein Verbindungsmittel vorgesehen ist, das einen Kupplungsteil der Reibkupplung mit einem Kupplungsteil der Formschlusskupplung verbindet, wobei mindestens eine der Komponenten drehfest ausgebildet ist.

Die Erfindung geht dabei von dem Gedanken aus, die schaltbaren Teile der Reibkupplung und der Formschlusskupplung mittels des Verbindungsmittels mechanisch oder hydraulisch miteinander zu verbinden, so dass mittels Aktuierung des Verbindungsmittels beide Kupplungen schaltbar sind. Die Parallelschaltung der Freilaufeinheit und der Formschlusskupplung zwischen der zweiten und der dritten Getriebekomponente wirkt wie ein verriegelbarer Freilauf, mittels dem die beiden Getriebekomponenten wahlweise in einer oder in beiden Drehrichtungen miteinander drehfest koppelbar sind, wobei mindestens eine der Komponenten drehfest ist und ein Getriebegehäuse darstellt. Dadurch ist eine Kraftübertragung bei Umkehr der Drehmomentrichtung in der Schaltanordnung möglich, was beispielsweise zur Rekuperation in einem Fahrzeug mit elektrischem Antrieb oder zum Rückwärtsfahren notwendig ist. Zum Betätigen der Formschlusskupplung ist eine Synchronisation der Drehzahlen der zweiten und der dritten Komponente notwendig, welche durch die Freilaufeinheit realisiert wird.

Einen bevorzugten Anwendungsfall stellt ein leistungsverzweigtes Getriebe dar. Dieses kann beispielsweise nach dem Prinzip der Planetensätze und/oder der Stirnraddifferentiale arbeiten. In einer solchen Anwendung kann beispielsweise eine mit einer Komponente eines Planetensatzes (Sonne, Planetenträger, Hohlrad) drehfest verbundene Welle abwechselnd mit einer treibenden Welle oder mit einer starren Welle gekoppelt werden. Aus diesen Schaltstellungen resultieren in einem leistungsverzweigten Getriebe zwei Gänge mit unterschiedlicher Übersetzung. Welche Drehrichtung in den verschiedenen Schaltstellungen Kraft übertragen kann, ist dabei von der Anordnung abhängig. Hieraus ergeben sich verschiedene technische Vorteile. Beispielsweise können mit der erfindungsgemäßen Schaltanordnung in einem Planetensatz zwei Vorwärtsgänge und einen Rückwärtsgang mit einer reibschlüssigen Kupplung, einer Freilaufeinrichtung und einer formschlüssigen Kupplung realisiert werden.

Diese können zugkraftunterbrechungsfrei geschaltet werden. Im Stand der Technik werden hierfür mindestens zwei Lamellenkupplungen benötigt, welche beim Schaltvorgang präzise synchronisiert werden müssen, ähnlich einer klassischen Doppelkupplung. Zudem ist der Energieverbrauch zum Schalten von zwei Lamellenkupplungen deutlich höher als bei der erfindungsgemäßen Schaltanordnung, was einen signifikanten Einfluss auf die Effizienz des Getriebes hat. Eine aufwändige Aktuierung zweier Lamellenkupplung mittels zweier Stellmittel ist in Schaltanordnungen nach dem Stand der Technik ebenfalls vonnöten, was sich im beanspruchten Bauraum und den Herstellungs- und Montageaufwand negativ auswirkt. Mithilfe der erfindungsgemäßen Schaltanordnung in einem leistungsverzweigten Getriebe reicht es beim Beschleunigungsvorgang aus, eine einzige Lamellenkupplung mittels eines einzigen Stellmittels zu öffnen oder zu schließen. Beim Öffnen der Lamellenkupplung greift die Freilaufeinheit und verhindert ein freies Drehen der verbundenen Komponente eines beispielhaften Planetengetriebes. Somit wird garantiert, dass der Leistungsfluss über die geschaltete Komponente oder über eine oder mehrere andere Komponenten wirken kann. Ein "Leerlauf", welcher beispielsweise bei einer schlecht synchronisierten Doppelkupplung vorübergehend ungewollt auftreten kann, wird in der erfindungsgemäßen Schaltanordnung verhindert. Um einen Rückwärtsgang und eine Rekuperation der Bewegungsenergie des Fahrzeuges zu gewährleisten, ist die Schaltanordnung mit einer Formschlusskupplung versehen, welche aus Sicherheitsgründen nur selektiv mit der Reibkupplung geschaltet werden kann. Somit kann die Formschlusskupplung und die Reibkupplung nicht zur gleichen Zeit geschlossen sein. Diese Formschlusskupplung kann zwei Wellen, welche durch die Freilaufeinrichtung synchronisiert wurden, miteinander drehfest koppeln. Somit ist eine Leistungsübertragung auch bei umgekehrter Drehmomentrichtung möglich, beispielsweise im Rückwärtsgang oder beim Nutzen der Motorbremse oder der Energierückgewinnung in Elektrofahrzeugen.

In vorteilhafter Ausführungsform umfasst die Schaltanordnung folgende Schaltzustände:
- Reibkupplung geöffnet und Formschlusskupplung geschlossen, oder
- Reibkupplung geöffnet und Formschlusskupplung geöffnet, oder
- Reibkupplung geschlossen und Formschlusskupplung geöffnet.

Dabei sind diese drei Schaltzustände aufgrund der vorzugsweise starren Verbindung der Kupplungen über das Verbindungsmittel seriell schaltbar, d.h. ein Schließen der einen Kupplung setzt ein vorangehendes Öffnen der anderen Kupplung voraus. Die Schaltanordnung kann somit beispielsweise für die Realisierung von zwei Vorwärtsgängen eingesetzt werden. Bei umgekehrter Drehrichtung der Eingangswelle des Getriebes, wie es bei elektrischen Antrieben möglich ist, kann hiermit ebenfalls ein Rückwärtsgang realisiert werden.

Es können wenigstens zwei der Komponenten koaxial zueinander angeordnet sein. Eine spezielle Ausführungsform, die nicht unter den Wortlaut des Anspruchs 1 fällt, besteht darin, alle drei Komponenten als koaxial zueinander drehbar auszubilden.

Insbesondere weist die Schaltanordnung ein Stellmittel auf, wobei das Stellmittel zur Verlagerung des Verbindungsmittels eingerichtet ist, sodass mittels des Stellmittels der Schaltzustand der Reibkupplung und/oder der Formschlusskupplung einstellbar ist. Beispielsweise ist das Stellmittel als ein hydraulisches Stellmittel oder als ein pneumatisches Stellmittel oder als ein mechanisches Stellmittel oder als ein elektro-mechanischer Aktuator oder als ein elektro-magnetischer Aktuator ausgebildet. Eine geeignete Form eines elektro-mechanischen Aktuators wird dabei etwa durch einen Wälzkörper-Rampe-Aktuator dargestellt. Vorzugsweise wird das Stellmittel durch eine Rückstellfeder ergänzt, wobei die Rückstellfeder zur Verlagerung des Verbindungsmittels eingerichtet ist. Die Verwendung einer Rückstellfeder ist vorteilhaft, da hydraulische, pneumatische und elektro-mechanische Stellmittel die zum Schließen oder Öffnen der Reibkupplung notwendigen hohen Kräfte oftmals nur in eine Richtung aufbringen können. Somit dient die Rückstellfeder insbesondere zum Aktuieren der Formschlusskupplung, wozu üblicherweise geringere Kräfte vonnöten sind.

In vorteilhafter Ausführungsform ist die Reibkupplung als eine Lamellenkupplung und/oder die Formschlusskupplung als eine Klauenkupplung ausgebildet. Mit weiterem Vorteil ist die Klauenkupplung selbstausrichtend ausgebildet, indem die Klauen der Klauenkupplung auf einer nicht kraftübertragenden Rückseite abgeschrägt ausgebildet sind oder indem die Klauenkupplung eine Drehfedereinheit aufweist. Der Kraftübertrag durch die Klauenkupplung erfolgt aufgrund der parallel geschalteten Freilaufeinheit lediglich in einer Drehrichtung, nämlich in derjenigen Drehrichtung, in welcher die Freilaufeinheit die zweite und die dritte Komponente nicht koppelt. Die abgeschrägte Ausbildung der nicht kraftübertragenden Rückseite der Klauen bzw. die Lagerung einer Hälfte der Kupplung mittels einer Drehfedereinheit gewährleistet ein reibungsarmes Schließen der Klauenkupplung unabhängig von der Stellung der beiden Kupplungshälften zueinander.

Die drehbaren Komponenten können insbesondere als treibende Wellen oder als abtreibende Wellen fungieren. Im Rahmen der vorliegenden Erfindung wird als treibende Welle eine solche Welle angesehen, die zur Leistungseinkopplung von einer Antriebseinheit, beispielsweise einer Brennkraftmaschine oder einem Elektromotor, in das Getriebe ausgebildet ist. Als abtreibende Welle wird eine solche Welle angesehen, die zur Leistungsauskopplung aus dem Getriebe in Richtung eines Abtriebs, insbesondere die Antriebswelle eines Kraftfahrzeugs oder auch eine Arbeitsmaschine, ausgebildet ist. Im Hinblick auf ein Kraftfahrzeuggetriebe entspricht dieser Leistungsfluss dem Zugbetrieb des Antriebsstrangs. Leistungsfluss und Drehmomentrichtung des Getriebes kehren sich im Schub- und/oder Rekuperationsbetrieb um. Selbiges gilt bei Betrieb der Antriebsmaschine entgegen der üblichen Antriebsrichtung, beispielsweise im Rückwärtsgang bei einem elektrischen Antrieb.

In einer Ausführungsform als 2-Gang-Getriebe umfasst das erfindungsgemäße Getriebe eine drehfeste Welle in Form eines Getriebegehäuses eine treibende Welle und eine abtreibende Welle, und weist weiterhin einen Planetensatz mit wenigstens einem Sonnenrad, mit wenigstens einem Planetenträger und mit wenigstens einem Hohlrad auf, wobei die erste Komponente drehfest mit der treibenden Welle wirkverbunden ist, und wobei die zweite Komponente als das Hohlrad und die dritte Komponente als die drehfeste Welle in Form des Getriebegehäuses ausgebildet sind, wobei die treibende Welle drehfest mit dem Sonnenrad und die abtreibende Welle drehfest mit dem Planetenträger wirkverbunden sind.

In einer Ausführungsform als 3-Gang-Getriebe umfasst das Getriebe eine drehfeste Welle in Form eines Getriebegehäuses eine treibende Welle und eine abtreibende Welle, und weist weiterhin eine erste Schaltanordnung und eine zweite Schaltanordnung auf, und umfasst weiterhin einen Planetensatz mit wenigstens einem Sonnenrad, mit wenigstens einem Planetenträger und mit wenigstens einem Hohlrad, wobei in der ersten Schaltanordnung
- die erste Komponente als die drehfeste Welle,
- die zweite Komponente als das Sonnenrad und/oder
- die dritte Komponente als die abtreibende Welle ausgebildet sind, und/oder wobei in der zweiten Schaltanordnung
- die erste Komponente als die drehfeste Welle,
- die zweite Komponente als das Hohlrad und/oder
- die dritte Komponente als die abtreibende Welle
ausgebildet sind, und/oder wobei die treibende Welle drehfest mit dem Planetenträger wirkverbunden ist.

In einer weiteren Ausführungsform umfasst das Getriebe eine drehfeste Welle in Form eines Getriebegehäuses eine erste treibende Welle, eine zweite treibende Welle und eine abtreibende Welle, und weist weiterhin eine erste erfindungsgemäße Schaltanordnung und eine zweite erfindungsgemäße Schaltanordnung auf, und umfasst weiterhin einen ersten Planetensatz und einen zweiten Planetensatz jeweils mit wenigstens einem Sonnenrad, mit wenigstens einem Planetenträger und mit wenigstens einem Hohlrad, wobei das Hohlrad des ersten Planetensatzes und das Sonnenrad des zweiten Planetensatzes drehfest miteinander wirkverbunden sind und ein Zwischenelement bilden, und wobei in der ersten Schaltanordnung
- die erste Komponente als die drehfeste Welle,
- die zweite Komponente als der Planetenträger des ersten Planetensatzes und/oder
- die dritte Komponente als die abtreibende Welle
   ausgebildet sind, und/oder wobei in der zweiten Schaltanordnung
- die erste Komponente als die drehfeste Welle,
- die zweite Komponente als das Hohlrad des zweiten Planetensatzes und/oder
- die dritte Komponente als die abtreibende Welle
ausgebildet sind, und/oder wobei die erste treibende Welle drehfest mit dem Planetenträger des zweiten Planetensatzes und/oder die zweite treibende Welle drehfest mit dem Sonnenrad des ersten Planetensatzes wirkverbunden sind. Diese Ausführungsform stellt ein doppelverschachteltes Planetengetriebe mit zwei Leistungseingängen dar, beispielsweise für eine Anwendung in einem Hybridantrieb.

### BEVORZUGTE AUSFÜHRUNGSBEISPIELE DER ERFINDUNG

Weitere, die Erfindung verbessernde Maßnahmen werden nachstehend gemeinsam mit der Beschreibung von bevorzugten Ausführungsbeispielen der Erfindung anhand der Figuren näher dargestellt. Es zeigt:
- Fig. 1: eine schematische Darstellung der erfindungsgemäßen Schaltanordnung,
- Fig. 2: eine tabellarische Übersicht von Schaltzuständen einer erfindungsgemäßen Schaltanordnung,
- Fig. 3: eine erste erfindungsgemäße Schaltanordnung,
- Fig. 4: eine zweite erfindungsgemäße Schaltanordnung,
- Fig. 5: eine dritte erfindungsgemäße Schaltanordnung,
- Fig. 6: ein erfindungsgemäßes 2-Gang-Getriebe,
- Fig. 7: ein erfindungsgemäßes 3-Gang-Getriebe,
- Fig. 8: ein erfindungsgemäßes Getriebe für Hybridantriebe, und
- Fig. 9a, b: zwei Ausführungsformen der selbstausrichtenden Klauenkupplung.

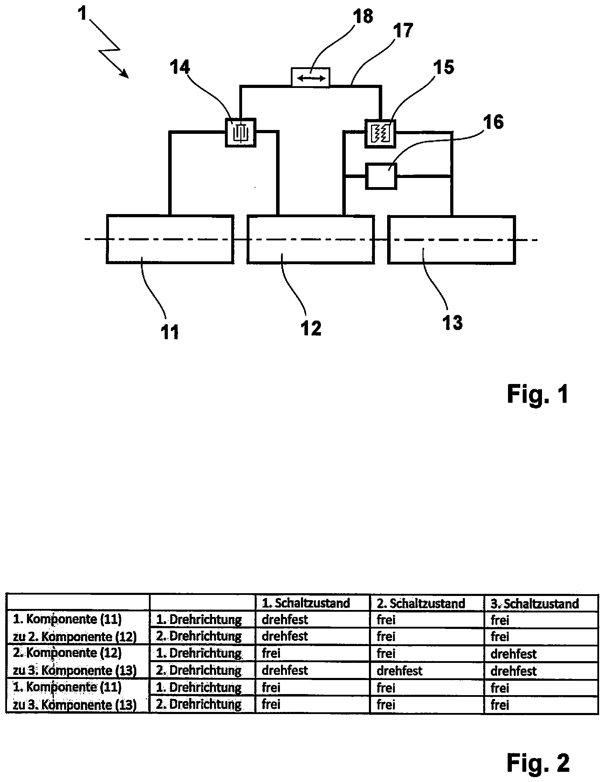

Fig. 1 zeigt eine schematische Darstellung der erfindungsgemäßen Schaltanordnung 1. Die erste Komponente 11, die zweite Komponente 12 sowie die dritte Komponente 13 sind hier beispielhaft koaxial zueinander um eine gemeinsame Achse drehbar dargestellt. Die erste Komponente 11 ist mittels der Reibkupplung 14 mit der zweiten Komponente 12 drehfest verbindbar, und die zweite Komponente 12 steht in Wechselwirkung mit der dritten Komponente 13 mittels der Parallelschaltung von Formschlusskupplung 15 und Freilaufeinheit 16. Dabei sind die Reibkupplung 14 und die Formschlusskupplung 15 über das Verbindungsmittel 17, vorzugsweise starr, miteinander verbunden und das Stellmittel 18 ist zur Verlagerung des Verbindungsmittels 17 eingerichtet, wodurch der Schaltzustand der Schaltanordnung 1 wählbar ist.

Mit der Schaltanordnung 1 sind die drei in der Fig. 2 tabellarisch dargestellten Schaltzustände schaltbar. Der erste Schaltzustand entspricht einer geschlossenen Reibkupplung 14 bei geöffneter Formschlusskupplung 15, der zweite Schaltzustand entspricht einer geöffneten Stellung sowohl der Reibkupplung 14 als auch der Formschlusskupplung 15, und der dritte Schaltzustand entspricht einer geschlossenen Formschlusskupplung 15 bei geöffneter Reibkupplung 14. Dabei sorgen sowohl die Reibkupplung 14 als auch das Zusammenspiel von Freilaufeinheit 16 und Formschlusskupplung 15 im geschlossenen Zustand für eine jeweils in beide Drehrichtungen drehfeste Verbindung zwischen den jeweiligen Getriebekomponenten 11 und 12 bzw. 12 und 13. Die Freilaufeinheit 16 gibt die zweite Komponente 12 und die dritte Komponente 13 in einer ersten Drehrichtung der drei Komponenten 11, 12 und 13 frei, und verbindet diese drehfest in der entgegengesetzten zweiten Drehrichtung. Das Verbindungsmittel 17 stellt eine, insbesondere starre, Verbindung zwischen einem beweglichen Kupplungsteil der Reibkupplung 14 und einem beweglichen Kupplungsteil der Formschlusskupplung 15 dar, sodass die drei Schaltzustände nur sequentiell schaltbar sind, d.h. zwischen erstem und drittem Schaltzustand nimmt die Schaltanordnung 1 stets den zweiten Schaltzustand ein. Erfindungsgemäß kann somit mit einer einzigen Aktuierung zwischen drei unterschiedlichen Schaltzuständen gewechselt werden. Eine Stellung der Schaltanordnung 1, in welcher sowohl die Reibkupplung 14 als auch die Formschlusskupplung 15 geschlossen sind, ist dabei ausgeschlossen.

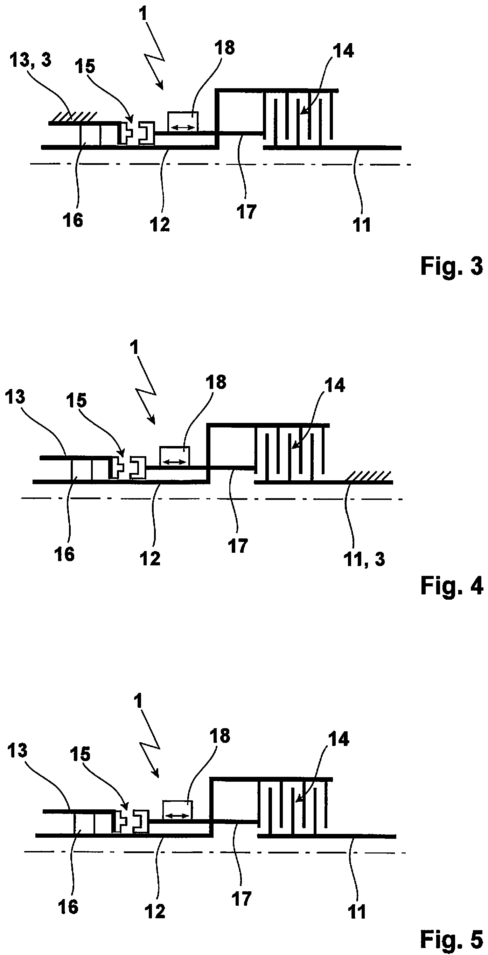

Die Figuren 3 - 5 zeigen unterschiedliche Optionen der erfindungsgemäßen Schaltanordnung 1 mit koaxial drehbaren Komponenten und/oder mit einer drehfesten Welle 3. Die Reibkupplung 14 ist hier jeweils in Form einer Lamellenkupplung ausgebildet und die Formschlusskupplung 15 in Form einer Klauenkupplung. Das Verbindungsmittel 17 sorgt für eine vorzugsweise starre Verbindung zwischen den beweglichen Teilen der beiden Kupplungen 14 und 15, sodass durch eine Verlagerung des Verbindungsmittels 17 über das Stellmittel 18 zwischen den unterschiedlichen Schaltzuständen geschaltet werden kann.

In dem in Fig. 3 dargestellten Ausführungsbeispiel sind die erste Komponente 11 und die zweite Komponente 12 als drehbare Wellen ausgebildet oder mit solchen drehfest wirkverbunden, und die dritte Komponente 13 stellt die drehfeste Welle 3 ein Getriebegehäuse dar.

In dem in Fig. 4 dargestellten Ausführungsbeispiel sind die zweite Komponente 12 und die dritte Komponente 13 als drehbare Wellen ausgebildet oder mit solchen drehfest wirkverbunden, und die erste Komponente 11 stellt die drehfeste Welle 3 in Form des Getriebegehäuses dar.

In dem in Fig. 5 dargestellten Ausführungsbeispiel sind sowohl die erste Komponente 11, als auch die zweite Komponente 12 und die dritte Komponente 13 als drehbare Wellen ausgebildet oder mit solchen drehfest wirkverbunden.

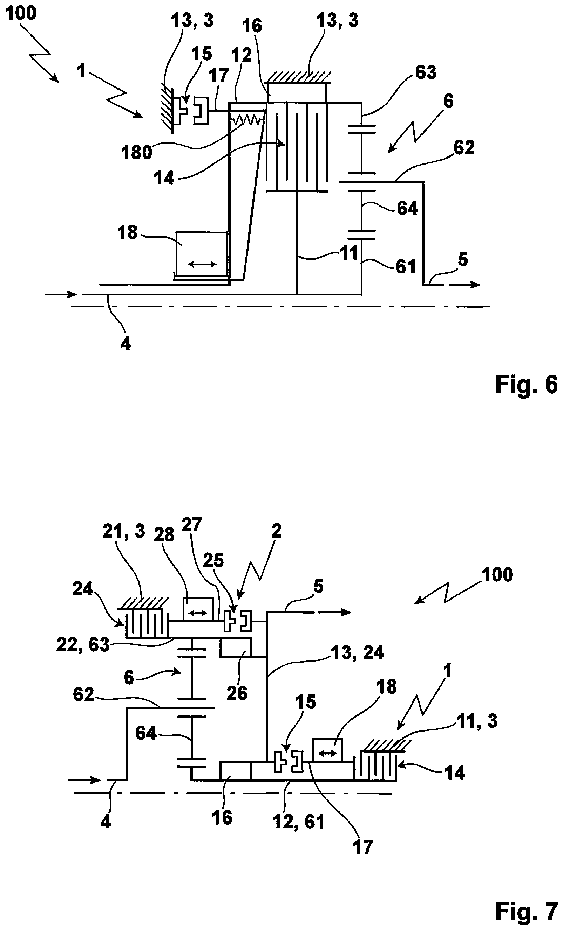

Fig. 6 zeigt eine Schaltanordnung 1 in einem Getriebe 100, welches eine drehfeste Welle 3 in Form eines Getriebegehäuses eine treibende Welle 4 und eine abtreibende Welle 5 umfasst, sowie einen Planetensatz 6 mit einem Sonnenrad 61, mit einem Planetenträger 62, mit einem Hohlrad 63 und mit Planetenrädern 64 aufweist. Die erste Komponente 11 der Schaltanordnung 1 ist dabei drehfest mit der treibenden Welle 4 wirkverbunden und die zweite Komponente 12 ist mit dem Hohlrad 63 drehfest verbunden und die dritte Komponente 13 ist als die drehfeste Welle 3 ausgebildet. Die treibende Welle 4 des Getriebes 100 ist drehfest mit dem Sonnenrad 61 wirkverbunden, und die abtreibende Welle 5 ist drehfest mit dem Planetenträger 62 wirkverbunden. Mit dem dargestellten Getriebe 100 können zwei Vorwärtsgänge unterschiedlicher Übersetzung sowie ein Rückwärtsgang bei umgekehrter Eingangsdrehzahl an der treibenden Welle 4 realisiert werden. In einem dem ersten Gang entsprechenden Schaltzustand ist die Reibkupplung 14 geöffnet und die Formschlusskupplung 15 geschlossen, sodass das Hohlrad 63 an der drehfesten Welle 3 mittels der Formschlusskupplung 15 bzw. mittels der Freilaufeinheit 16 festgebremst ist. Dabei ist die Freilaufeinheit 16 derart orientiert, dass sie in einer der Rückwärtsrichtung entsprechenden Drehrichtung eingreift und das Hohlrad 63 an der drehfesten Welle 3 festsetzt. In der entgegengesetzten, dem Rückwärtsgang entsprechenden Drehrichtung des Getriebes 100 wird das Hohlrad 63 über die Formschlusskupplung 15 festgesetzt.

Die kombinierte Wirkung von Formschlusskupplung 15 und Freilaufeinheit 16 wird hier beispielhaft ersichtlich. Der Planetenträger 62 arbeitet beim Beschleunigen gegen den Widerstand der abtreibenden Welle 5, bis das Hohlrad 63 aufgrund des Übersetzungsverhältnisses entgegen der Antriebsrichtung drehen müsste. Dies wird durch die Freilaufeinheit 16 verhindert. Wird andernfalls die treibende Welle 4 zum Rückwärtsfahren in entgegengesetzter Drehrichtung betrieben, stünde der Planetenträger 62 aufgrund des Widerstandes der abtreibenden Welle 5 still, wodurch das Hohlrad 63 frei überdrehen und keine Kraftübertragung stattfinden würde. Aufgrund der geschlossenen Formschlusskupplung 15 ist aber das Hohlrad 63 an der drehfesten Welle 3 festgesetzt, so dass der Planetenträger 62 zwangsläufig gegen den Abtriebswiderstand dreht.

Ein weiterer Vorwärtsgang des Getriebes 100 mit kleinerer Übersetzung wird durch einen weiteren Schaltzustand der Schaltanordnung 1 realisiert, welcher durch eine geschlossene Reibkupplung 14 bei geöffneter Formschlusskupplung 15 gebildet ist. Der Wechsel zwischen diesen Schaltzuständen wird durch das auf das Verbindungsmittel 17 wirkende Stellmittel 18 realisiert, welches zum Schließen der Reibkupplung Formschlusskupplung 15 gegen die Rückstellkraft der Rückstellfeder 180 ausgebildet ist.

Fig. 7 zeigt ein 3-Gang-Getriebe 100, welches eine drehfeste Welle 3 in Form eines Getriebegehäuses eine treibende Welle 4 und eine abtreibende Welle 5 umfasst, sowie eine erste erfindungsgemäße Schaltanordnung 1 und eine zweite erfindungsgemäße Schaltanordnung 2 aufweist, sowie weiterhin einen Planetensatz 6 mit einem Sonnenrad 61, mit einem Planetenträger 62, mit einem Hohlrad 63, und mit Planetenrädern 64. Dabei ist in der ersten Schaltanordnung 1 die erste Komponente 11 als die drehfeste Welle 3, die zweite Komponente als das Sonnenrad 61 und die dritte Komponente 13 als die abtreibende Welle 5 ausgebildet, und in der zweiten Schaltanordnung 2 ist die erste Komponente 21 als die drehfeste Welle 3, die zweite Komponente 22 als das Hohlrad 63 und die dritte Komponente 23 als die abtreibende Welle 5 ausgebildet, wobei die treibende Welle 4 drehfest mit dem Planetenträger 62 wirkverbunden ist. Das Sonnenrad 61 steht über die Formschlusskupplung 15 und die Freilaufeinheit 16 mit der abtreibenden Welle 5 in Wechselwirkung und ist mittels der Reibkupplung 14 an der drehfesten Welle 3 festbremsbar. Das Hohlrad 63 ist über die Formschlusskupplung 25 bzw. die Freilaufeinheit 26 drehfest mit der abtreibenden Welle 5 verbindbar und mittels der Reibkupplung 24 an der drehfesten Welle 3 festbremsbar.

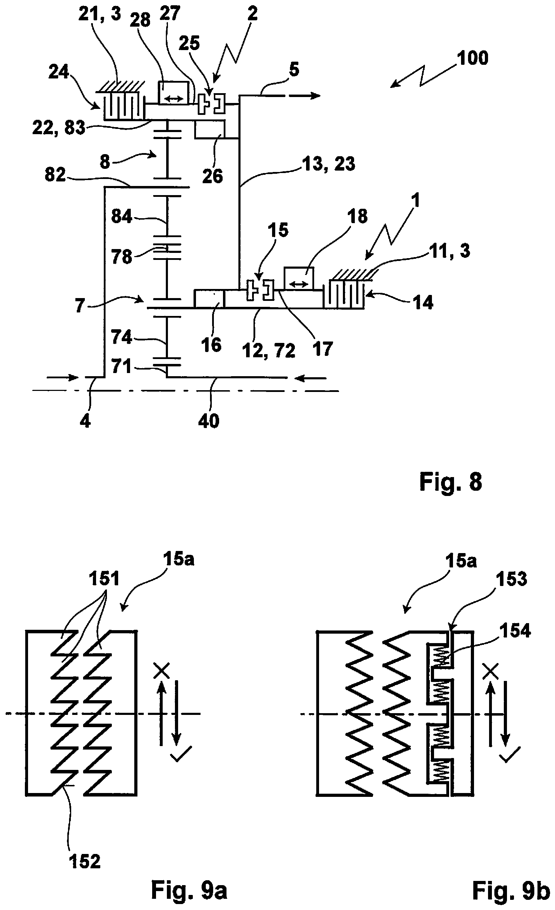

Fig. 8 zeigt ein Getriebe 100 mit zwei antreibenden Wellen 4 und 40, über welche, beispielsweise in einem hybriden Antriebskonzept, sowohl über eine Brennkraftmaschine als auch über einen Elektromotor Leistung in das Getriebe 100 einkoppelbar ist. Das Getriebe 100 weist eine erste Schaltanordnung 1 und eine zweite Schaltanordnung 2 auf und weiterhin einen ersten Planetensatz 7 und einen zweiten Planetensatz 8, jeweils mit einem Sonnenrad 71, mit einem Planetenträger 72, 82, mit einem Hohlrad 83 und mit Planetenrädern 74, 84, wobei das Hohlrad des ersten Planetensatzes 7 und das Sonnenrad des zweiten Planetensatzes 8 drehfest miteinander wirkverbunden sind und das Zwischenelement 78 bilden. In der ersten Schaltanordnung 1 ist die erste Komponente 11 als die drehfeste Welle 3, die zweite Komponente 12 als der Planetenträger 72 und die dritte Komponente 13 als die abtreibende Welle 5 ausgebildet und in der zweiten Schaltanordnung 2 ist die erste Komponente 21 als die drehfeste Welle 3, die zweite Komponente als das Hohlrad 83 und die dritte Komponente 23 als die abtreibende Welle 5 ausgebildet. Dabei ist die erste antreibende Welle 4 drehfest mit dem Planetenträger 82 des zweiten Planetensatzes 8 und die zweite antreibende Welle 40 drehfest mit dem Sonnenrad 71 des ersten Planetensatzes 7 wirkverbunden. Über die erste Schaltanordnung 1 kann der Planetenträger 72 des ersten Planetensatzes 7 mit der abtreibenden Welle 5 in Wechselwirkung geschaltet oder an der drehfesten Welle 3 festgebremst werden. Mittels der zweiten Schaltanordnung 2 kann das Hohlrad 83 des zweiten Planetensatzes 8 mit der abtreibenden Welle 5 in Wechselwirkung geschaltet oder an der drehfesten Welle 3 festgebremst werden.

Die Figuren 9a und 9b zeigen zwei Ausführungsformen einer Formschlusskupplung als selbstausrichtende Klauenkupplung 15a.

In der in Fig. 9a dargestellten Ausführungsform sind die Klauen 151 auf der nicht kraftübertragenden Rückseite 152 abgeschrägt ausgebildet. In einer erfindungsgemäßen Schaltanordnung erfolgt der Kraftübertrag mittels der Klauenkupplung 15a aufgrund der parallel geschalteten Freilaufeinheit lediglich in einer Drehrichtung, nämlich in derjenigen Drehrichtung in welcher die Freilaufeinheit die zweite und die dritte Komponente der Schaltanordnung nicht drehfest verbindet. Beim Schließen der Klauenkupplung 15a können die abgeschrägten Rückseiten 152 der beiden Klauenhälften aneinander entlanggleiten, sodass ein reibungsarmes und zuverlässiges Schließen der Klauenkupplung 15a gewährleistet ist und somit ein Verklemmen der erfindungsgemäßen Schaltanordnung vermieden wird.

Die in der Fig. 9b dargestellte alternative Ausführungsform der selbstausrichtenden Klauenkupplung 15a ermöglicht ebenfalls ein zuverlässiges Schließen. Dazu ist in diesem Fall die eine Hälfte der Kupplung 15a mittels der Drehfedereinheit 153 gelagert, wobei die Drehfedereinheit 153 eine Verdrehung der gelagerten Kupplungshälfte um beispielsweise wenige Grad gegen die Rückstellkraft der Federn 154 ermöglicht. Dadurch ist ein selbstausrichtender Schließvorgang der Klauenkupplung 15a gewährleistet.

Die Erfindung beschränkt sich in ihrer Ausführung nicht auf die vorstehend angegebenen bevorzugten Ausführungsbeispiele. Ein Getriebeaufbau darf zudem eine beliebige Anzahl an erfindungsgemäßen Schaltanordnung aufweisen. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten und räumlicher Anordnungen, können sowohl für sich als auch in den verschiedensten Kombinationen erfindungswesentlich sein.

### Bezugszeichenliste

- 100: Getriebe
- 1, 2: Schaltanordnung
- 11, 21: erste Komponente
- 12, 22: zweite Komponente
- 13, 23: dritte Komponente
- 14, 24: Reibkupplung
- 15, 25: Formschlusskupplung
- 15a: Klauenkupplung
- 151: Klaue
- 152: Rückseite
- 153: Drehfedereinheit
- 154: Feder
- 16, 26: Freilaufeinheit
- 17, 27: Verbindungsmittel
- 18, 28: Stellmittel
- 180: Rückstellfeder
- 3: drehfeste Welle
- 4, 40: treibende Welle
- 5: abtreibende Welle
- 6, 7, 8: Planetensatz
- 61, 71: Sonnenrad
- 62, 72, 82: Planetenträger
- 63, 83: Hohlrad
- 64, 74, 84: Planetenrad
- 78: Zwischenelement

## Patentansprüche

1. Getriebe (100) mit wenigstens einer Schaltanordnung (1, 2) aufweisend:
- eine erste Komponente (11, 21),
- eine zweite Komponente (12, 22) und
- eine dritte Komponente (13, 23),
wobei die Komponenten (11, 12, 13, 21, 22, 23) schaltzustandsabhängig in Wechselwirkung stehen, indem:
- eine Reibkupplung (14, 24) zwischen der ersten Komponente (11, 21) und der zweiten Komponente (12, 22) angeordnet ist,
- eine Formschlusskupplung (15, 25) zwischen der zweiten Komponente (12, 22) und der dritten Komponente (13, 23) angeordnet ist und
- eine Freilaufeinheit (16, 26) zwischen der zweiten Komponente (12, 22) und der dritten Komponente (13, 23) angeordnet ist, und wobei ein Verbindungsmittel (17, 27) vorgesehen ist, das einen Kupplungsteil der Reibkupplung (14, 24) mit einem Kupplungsteil der Formschlusskupplung (15, 25) verbindet,
**dadurch gekennzeichnet, dass** mindestens eine der Komponenten (11, 12, 13, 21, 22, 23) drehfest ausgebildet ist.

2. Getriebe (100) mit wenigstens einer Schaltanordnung (1, 2) nach Anspruch 1,
**dadurch gekennzeichnet,**
**dass** die Schaltanordnung (1, 2) folgende Schaltzustände umfasst:
- Reibkupplung (14, 24) geöffnet und Formschlusskupplung (15, 25) geschlossen, oder
- Reibkupplung (14, 24) geöffnet und Formschlusskupplung (15, 25) geöffnet, oder
- Reibkupplung (14, 24) geschlossen und Formschlusskupplung (15, 25) geöffnet.

3. Getriebe (100) mit wenigstens einer Schaltanordnung (1, 2) nach Anspruch 1 oder 2,
**dadurch gekennzeichnet,**
**dass** wenigstens zwei der Komponenten (11, 12, 13, 21, 22, 23) koaxial zueinander drehbar sind und/oder die drehfeste Komponente (3) das Getriebegehäuse bildet.

4. Getriebe (100) mit wenigstens einer Schaltanordnung (1, 2) nach einem der vorgenannten Ansprüche,
**dadurch gekennzeichnet,**
**dass** die Schaltanordnung (1, 2) ein Stellmittel (18, 28) aufweist, wobei das Stellmittel (18, 28) zur Verlagerung des Verbindungsmittels (17, 27) eingerichtet ist, sodass mittels des Stellmittels (18, 28) der Schaltzustand der Reibkupplung (14, 24) und/oder der Formschlusskupplung (15, 25) einstellbar ist.

5. Getriebe (100) mit wenigstens einer Schaltanordnung (1, 2) nach einem der vorgenannten Ansprüche,
**dadurch gekennzeichnet,**
**dass** das Stellmittel (18, 28) als ein hydraulisches Stellmittel oder als ein pneumatisches Stellmittel oder als ein mechanisches Stellmittel oder als ein elektro-mechanischer Aktuator oder als ein elektro-magnetischer Aktuator ausgebildet ist.

6. Getriebe (100) mit wenigstens einer Schaltanordnung (1, 2) nach einem der vorgenannten Ansprüche,
**dadurch gekennzeichnet,**
**dass** das Stellmittel (18, 28) eine Rückstellfeder (180) aufweist, wobei die Rückstellfeder (180) zur Verlagerung des Verbindungsmittels (17, 27) eingerichtet ist.

7. Getriebe (100) mit wenigstens einer Schaltanordnung (1, 2) nach einem der vorgenannten Ansprüche,
**dadurch gekennzeichnet,**
**dass** die Reibkupplung (14, 24) als eine Lamellenkupplung und/oder die Formschlusskupplung (15, 25) als eine Klauenkupplung (15a) ausgebildet ist.

8. Getriebe (100) mit wenigstens einer Schaltanordnung (1, 2) nach Anspruch 7,
**dadurch gekennzeichnet,**
**dass** die Klauenkupplung (15a) selbstausrichtend ausgebildet ist, indem die Klauen (151) der Klauenkupplung (15a) auf einer nicht kraftübertragenden Rückseite (152) abgeschrägt ausgebildet sind oder indem die Klauenkupplung (15a) eine Drehfedereinheit (153) aufweist.

9. Getriebe (100) nach einem der Ansprüche 1-8,
**dadurch gekennzeichnet,**
**dass** das Getriebe (100) die drehfeste Komponente (3), eine treibende Welle (4) und eine abtreibende Welle (5) umfasst, und weiterhin einen Planetensatz (6) mit wenigstens einem Sonnenrad (61), mit wenigstens einem Planetenträger (62) und mit wenigstens einem Hohlrad (63) aufweist, wobei die erste Komponente (11) drehfest mit der treibenden Welle (4) wirkverbunden ist, und wobei die zweite Komponente (12) als das Hohlrad (63) und die dritte Komponente (13) als die drehfeste Komponente (3) ausgebildet sind, wobei die treibende Welle (4) drehfest mit dem Sonnenrad (61) und die abtreibende Welle (5) drehfest mit dem Planetenträger (62) wirkverbunden sind.

10. Getriebe (100) nach einem der Ansprüche 1-8,
**dadurch gekennzeichnet,**
**dass** das Getriebe (100) die drehfeste Komponente (3), eine treibende Welle (4) und eine abtreibende Welle (5) umfasst, und weiterhin eine erste Schaltanordnung (1) und eine zweite Schaltanordnung (2) aufweist, und weiterhin einen Planetensatz (6) mit wenigstens einem Sonnenrad (61), mit wenigstens einem Planetenträger (62) und mit wenigstens einem Hohlrad (63) umfasst, wobei in der ersten Schaltanordnung (1)
- die erste Komponente (11) als die drehfeste Komponente (3),
- die zweite Komponente (12) als das Sonnenrad (61) und/oder
- die dritte Komponente (13) als die abtreibende Welle (5) ausgebildet sind, und/oder wobei in der zweiten Schaltanordnung (2)
- die erste Komponente (21) als die drehfeste Komponente (3),
- die zweite Komponente (22) als das Hohlrad (63) und/oder
- die dritte Komponente (23) als die abtreibende Welle (5) ausgebildet sind, und/oder wobei die treibende Welle (4) drehfest mit dem Planetenträger (62) wirkverbunden ist.

11. Getriebe (100) nach einem der Ansprüche 1-8,
**dadurch gekennzeichnet,**
**dass** das Getriebe (100) die drehfeste Komponente (3), eine erste treibende Welle (4), eine zweite treibende Welle (40) und eine abtreibende Welle (5) umfasst, und weiterhin eine erste Schaltanordnung (1) und eine zweite Schaltanordnung (2) aufweist, und weiterhin einen ersten Planetensatz (7) und einen zweiten Planetensatz (8) jeweils mit wenigstens einem Sonnenrad (71), mit wenigstens einem Planetenträger (72, 82) und mit wenigstens einem Hohlrad (83) umfasst, wobei das Hohlrad des ersten Planetensatzes (7) und das Sonnenrad des zweiten Planetensatzes (8) drehfest miteinander wirkverbunden sind und ein Zwischenelement (78) bilden, und wobei in der ersten Schaltanordnung (1)
- die erste Komponente (11) als die drehfeste Komponente (3),
- die zweite Komponente (12) als der Planetenträger (72) des ersten Planetensatzes (7) und/oder
- die dritte Komponente (13) als die abtreibende Welle (5) ausgebildet sind, und/oder wobei in der zweiten Schaltanordnung (2)
- die erste Komponente (21) als die drehfeste Komponente (3),
- die zweite Komponente (22) als das Hohlrad (83) des zweiten Planetensatzes (8) und/oder
- die dritte Komponente (23) als die abtreibende Welle (5) ausgebildet sind, und/oder wobei die erste treibende Welle (4) drehfest mit dem Planetenträger (82) des zweiten Planetensatzes (8) und/oder die zweite treibende Welle (40) drehfest mit dem Sonnenrad (71) des ersten Planetensatzes (7) wirkverbunden sind.

## Claims

1. A transmission (100) having at least one shifting assembly (1, 2) comprising:
- a first component (11, 21);
- a second component (12, 22); and
- a third component (13, 23),
wherein the components (11, 12, 13, 21, 22, 23) interact in dependence on the shifting state in that:
- a friction clutch (14, 24) is arranged between the first component (11, 21) and the second component (12, 22);
- a positively locking clutch (15, 25) is arranged between the second component (12, 22) and the third component (13, 23); and
- a positively locking clutch (16, 26) is arranged between the second component (12, 22) and the third component (13, 23);
and wherein a connection means (17, 27) is provided that connects a coupling part of the friction clutch (14, 24) to a coupling part of the positively locking clutch (15, 25),
**characterized in that**
at least one of the components (11, 12, 13, 21, 22, 23) is configured as rotationally fixed.

2. A transmission (100) having at least one shifting assembly (1, 2) in accordance with claim 1
**characterized in that**
the shifting assembly (1, 2) comprises the following shifting states:
- friction clutch (14, 24) open and positively locking clutch (15, 25) closed; or
- friction clutch (14, 24) open and positively locking clutch (15, 25) open; or
- friction clutch (14, 24) closed and positively locking clutch (15, 25) open.

3. A transmission (100) having at least one shifting assembly (1, 2) in accordance with claim 1 or claim 2,
**characterized in that**
at least one of the components (11, 12, 13, 21, 22, 23) are coaxially rotatable with respect to one another and/or the rotationally fixed component (22,23) forms the transmission casing.

4. A transmission (100) having at least one shifting assembly (1, 2) in accordance with one of the preceding claims,
**characterized in that**
the shifting assembly (1, 2) has an actuating means (18, 28), with the actuating means (18, 28) being adapted to displace the connection means (17, 27) so that the shifting state of the friction clutch (14, 24) and/or of the positively locking clutch (15, 25) can be set by means of the actuating means (18, 28).

5. A transmission (100) having at least one shifting assembly (1, 2) in accordance with one of the preceding claims,
**characterized in that**
the actuating means (18, 28) is configured as a hydraulic actuating means or as a pneumatic actuating means or as a mechanical actuating means or as an electromechanical actuator or as an electromagnetic actuator.

6. A transmission (100) having at least one shifting assembly (1, 2) in accordance with one of the preceding claims,
**characterized in that**
the actuating means (18, 28) has a return spring (180), with the return spring (180) being configured to displace the connection means (17, 27).

7. A transmission (100) having at least one shifting assembly (1, 2) in accordance with one of the preceding claims,
**characterized in that**
the friction clutch (14, 24) is formed as a multidisk clutch and/or the positively locking clutch (15, 25) is formed as a dog clutch (15a).

8. A transmission (100) having at least one shifting assembly (1, 2) in accordance with claim 7,
**characterized in that**
the dog clutch (15a) is formed as self-aligning **in that** the dogs (151) of the dog clutch (15a) are formed as chamfered on a rear side (152) not transferring power or **in that** the dog clutch (15a) has a coil spring unit (153).

9. A transmission (100) in accordance with one of the claims 1 to 8,
**characterized in that**
the transmission (100) comprises the rotationally fixed component (3), an input shaft (4), and an output shaft (5) and furthermore has a planetary set (6) having at least one sun gear (61), having at least one planetary gear (62), and having at least one annulus gear (63), wherein the first component (11) is rotationally fixedly operatively connected to the input shaft (4) and wherein the second component (12) is formed as the annulus gear (63) and the third component (13) is formed as the rotationally fixed component (3), wherein the input shaft (4) is rotationally fixedly operatively connected to the sun gear (61) and the output shaft (5) is rotationally fixedly operatively connected to the planetary carrier (62).

10. A transmission (100) in accordance with one of the claims 1 to 8,
**characterized in that**
the transmission (100) comprises the rotationally fixed component (3), an input shaft (4), and an output shaft (5) and furthermore has a first shifting assembly (1) and a second shifting assembly (2), and furthermore comprises a planetary set (6) having at least one sun gear (61), having at least one planetary carrier (62), and having at least one annulus gear (63), wherein, in the first shifting assembly (1),
- the first component (11) is formed as the rotationally fixed component (3);
- the second component (12) is formed as the sun gear (61); and/or
- .the third component is formed as the output shaft (5);
and/or wherein, in the second shifting assembly (2),
- the first component (21) is formed as the rotationally fixed component (3);
- the second component (22) is formed as the annulus gear (63); and/or
- the third component is formed as the output shaft; (5) and/or wherein the input shaft (4) is rotationally fixedly operatively connected to the planetary carrier (62).

11. A transmission (100) in accordance with one of the claims 1 to 8, **characterized in that**
the transmission (100) comprises the rotationally fixed component (3), a first input shaft (4), a second input shaft (40), and an output shaft (5) and furthermore has a first shifting assembly (1) and a second shifting assembly (2), and furthermore comprises a first planetary set (7) and a second planetary set (8), each having at least one sun gear (71), having at least one planetary carrier (72, 82), and having at least one annulus gear (83), wherein the annulus gear of the first planetary set (7) and the sun gear of the second planetary set (8) are rotationally fixedly operatively connected to one another and form an intermediate element (78) and wherein, in the first shifting assembly (1),
- the first component (11) is formed as the rotationally fixed component (3);
- the second component (12) is formed as the planetary carrier (72) of the first planetary set (7); and/or
- the third component (13) is formed as the output shaft (5);
and/or wherein, in the second shifting assembly (2),
- the first component (21) is formed as the rotationally fixed component (3);
- the second component (22) is formed as the annulus gear (83) of the second planetary set (8); and/or
-- the third component (23) is formed as the output shaft (5); and/or wherein the first input shaft (4) is rotationally fixedly operatively connected to the planetary carrier (82) of the second planetary set (8) and/or the second input shaft (40) is rotationally fixedly operatively connected to the sun gear (61) of the first planetary set (7).

## Revendications

1. Transmission (100) dotée d'au moins un ensemble changement de vitesse (1, 2), présentant :
- un premier composant (11, 21),
- un deuxième composant (12, 22) et
- un troisième composant (13, 23),
les composants (11, 12, 13, 21, 22, 23) étant en interaction en fonction de l'état de changement de vitesse, du fait que :
- un embrayage à friction (14, 24) est agencé entre le premier composant (11, 21) et le deuxième composant (12, 22),
- un embrayage à complémentarité de forme (15, 25) est agencé entre le deuxième composant (12, 22) et le troisième composant (13, 23) et
- une unité roue libre (16, 26) est agencée entre le deuxième composant (12, 22) et le troisième composant (13, 23),
et un moyen de liaison (17, 27) étant prévu, lequel relie une partie d'embrayage de l'embrayage à friction (14, 24) à une partie d'embrayage de l'embrayage à complémentarité de forme (15, 25),
**caractérisée en ce que**
au moins un des composants (11, 12, 13, 21, 22, 23) est réalisé bloqué en rotation.

2. Transmission (100) dotée d'au moins un ensemble changement de vitesse (1, 2) selon la revendication 1,
**caractérisée en ce que**
l'ensemble changement de vitesse (1, 2) comprend les états de changement de vitesse suivants :
- embrayage à friction (14, 24) ouvert et embrayage à complémentarité de forme (15, 25) fermé, ou
- embrayage à friction (14, 24) ouvert et embrayage à complémentarité de forme (15, 25) ouvert, ou
- embrayage à friction (14, 24) fermé et embrayage à complémentarité de forme (15, 25) ouvert.

3. Transmission (100) dotée d'au moins un ensemble changement de vitesse (1, 2) selon la revendication 1 ou 2,
**caractérisée en ce que**
au moins deux des composants (11, 12, 13, 21, 22, 23) sont rotatifs l'un par rapport à l'autre de manière coaxiale et/ou le composant (3) bloqué en rotation forme le boîtier de transmission.

4. Transmission (100) dotée d'au moins un ensemble changement de vitesse (1, 2) selon l'une des revendications précédentes,
**caractérisée en ce que**
l'ensemble changement de vitesse (1, 2) présente un moyen de réglage (18, 28), le moyen de réglage (18, 28) étant conçu pour déplacer le moyen de liaison (17, 27) de telle sorte que, à l'aide du moyen de réglage (18, 28), l'état de changement de vitesse de l'embrayage à friction (14, 24) et/ou de l'embrayage à complémentarité de forme (15, 25) peut être réglé.

5. Transmission (100) dotée d'au moins un ensemble changement de vitesse (1, 2) selon l'une des revendications précédentes,
**caractérisée en ce que**
le moyen de réglage (18, 28) est réalisé sous la forme d'un moyen de réglage hydraulique ou d'un moyen de réglage pneumatique ou d'un moyen de réglage mécanique ou d'un actionneur électromécanique ou d'un actionneur électromagnétique.

6. Transmission (100) dotée d'au moins un ensemble changement de vitesse (1, 2) selon l'une des revendications précédentes,
**caractérisée en ce que**
le moyen de réglage (18, 28) présente un ressort de rappel (180), le ressort de rappel (180) étant conçu pour déplacer le moyen de liaison (17, 27).

7. Transmission (100) dotée d'au moins un ensemble changement de vitesse (1, 2) selon l'une des revendications précédentes,
**caractérisée en ce que**
l'embrayage à friction (14, 24) est réalisé sous la forme d'un embrayage à disques multiples et/ou l'embrayage à complémentarité de forme (15, 25) est réalisé sous la forme d'un embrayage à griffes (15a).

8. Transmission (100) dotée d'au moins un ensemble changement de vitesse (1, 2) selon la revendication 7,
**caractérisée en ce que**
l'embrayage à griffes (15a) est réalisé à alignement automatique, du fait que les griffes (151) de l'embrayage à griffes (15a) sont réalisées biseautées sur une face arrière ne transmettant pas de force (152) ou du fait que l'embrayage à griffes (15a) présente une unité ressort de torsion (153).

9. Transmission (100) selon l'une des revendications 1 à 8,
**caractérisée en ce que**
la transmission (100) comprend le composant (3) bloqué en rotation, un arbre moteur (4) et un arbre récepteur (5), et présente par ailleurs un train planétaire (6) doté d'au moins un planétaire (61), d'au moins un porte-satellites (62) et d'au moins une couronne (63), le premier composant (11) étant en liaison fonctionnelle solidaire en rotation avec l'arbre moteur (4) et le deuxième composant (12) étant réalisé comme couronne (63) et le troisième composant (13) comme composant (3) bloqué en rotation, l'arbre moteur (4) étant en liaison fonctionnelle solidaire en rotation avec le planétaire (61) et l'arbre récepteur (5) en liaison fonctionnelle solidaire en rotation avec le porte-satellites (62).

10. Transmission (100) selon l'une des revendications 1 à 8,
**caractérisée en ce que**
la transmission (100) comprend le composant (3) bloqué en rotation, un arbre moteur (4) et un arbre récepteur (5), et présente par ailleurs un premier ensemble changement de vitesse (1) et un deuxième ensemble changement de vitesse (2), et comprend en outre un train planétaire (6) doté d'au moins un planétaire (61), d'au moins un porte-satellites (62) et d'au moins une couronne (63), dans laquelle, dans le premier ensemble changement de vitesse (1)
- le premier composant (11) est réalisé comme composant (3) bloqué en rotation,
- le deuxième composant (12) comme planétaire (61) et/ou
- le troisième composant (13) comme arbre récepteur (5) et/ou dans laquelle, dans le deuxième ensemble changement de vitesse (2)
- le premier composant (21) est réalisé comme composant (3) bloqué en rotation,
- le deuxième composant (22) comme couronne (63) et/ou
- le troisième composant (23) comme arbre récepteur (5)
et/ou dans laquelle l'arbre moteur (4) est en liaison fonctionnelle solidaire en rotation avec le porte-satellites (62).

11. Transmission (100) selon l'une des revendications 1 à 8,
**caractérisée en ce que**
la transmission (100) comprend le composant (3) bloqué en rotation, un premier arbre moteur (4), un deuxième arbre moteur (40) et un arbre récepteur (5), et présente par ailleurs un premier ensemble changement de vitesse (1) et un deuxième ensemble changement de vitesse (2), et comprend en outre un premier train planétaire (7) et un deuxième train planétaire (8) chacun doté d'au moins un planétaire (71), d'au moins un porte-satellites (72, 82) et d'au moins une couronne (83), la couronne du premier train planétaire (7) et le planétaire du deuxième train planétaire (8) étant en liaison fonctionnelle solidaire en rotation l'un avec l'autre et formant un élément intermédiaire (78), et dans laquelle, dans le premier ensemble changement de vitesse (1)
- le premier composant (11) est réalisé comme composant (3) bloqué en rotation,
- le deuxième composant (12) comme porte-satellites (72) du premier train planétaire (7) et/ou
- le troisième composant (13) comme arbre récepteur (5)
et/ou dans laquelle, dans le deuxième ensemble changement de vitesse (2)
- le premier composant (21) est réalisé comme composant (3) bloqué en rotation,
- le deuxième composant (22) comme couronne (83) du deuxième train planétaire (8) et/ou
- le troisième composant (23) comme arbre récepteur (5)
et/ou dans laquelle le premier arbre moteur (4) est en liaison fonctionnelle solidaire en rotation avec le porte-satellites (82) du deuxième train planétaire (8) et/ou le deuxième arbre moteur (40) est en liaison fonctionnelle solidaire en rotation avec le planétaire (71) du premier train planétaire (7).
